# EUROPÄISCHE PATENTANMELDUNG

(11) **EP 1 698 717 A1**
(43) Veröffentlichungstag der Anmeldung: **06.09.2006**
(21) Anmeldenummer: 06075516.2
(22) Anmeldetag: 03.03.2006
(51) Int. Cl.: D01F 2/00, C08L 1/00

(54) **Thermische Stabilisierung von Lyocell- Spinnlösungen**

(30) Priorität: 04.03.2005 DE 102005010560
(71) Anmelder: THÜRINGISCHES INSTITUT FÜR TEXTIL- UND KUNSTSTOFF-FORSCHUNG e.V., 07407 Rudolstadt (DE)
(72) Erfinder: Wendler, Frank, 07747 Jena (DE); Graness, Dr. Gerhard, 07768 Kahla (DE); Büttner, Reiner, 07407 Rudolstadt (DE)
(74) Vertreter: Wablat, Wolfgang

(57) **Zusammenfassung**

Die Erfindung betrifft thermisch stabile Form- und Spinnlösungen, welche Cellulose, wasserhaltige, tertiäre Aminoxide und ein Nichtlösemittel enthalten, zur Herstellung von cellulosischen Formkörpern nach einem Trocken-Nass-Extrusionsverfahren. Die Erfindung ist dadurch gekennzeichnet, dass ein oder mehrere Stabilisatoren -vorzugsweise Formaldehyd und/oder Morpholin- in Mengen von mindestens 0,01 Ma.-% bezogen auf die Gesamtmasse der Spinnlösung enthalten sind. Bevorzugt werden Stabilisatoren eingesetzt, die selbst Produkte des spontanen Zerfalls der verwendeten Lösungsmittel sind. Ebenso betrifft die Erfindung ein Verfahren zur thermischen Stabilisierung von Form- und Spinnlösungen, welche Cellulose, wasserhaltige, tertiäre Aminoxide und ein Nichtlösemittel enthalten, zur Herstellung von cellulosischen Formkörpern nach einem Trocken-Nass-Extrusionsverfahren. Das erfindungsgemäße Verfahren ist dadurch gekennzeichnet, dass Stabilisatorenvorzugsweise Formaldehyd und/oder Morpholin- in Mengen von mindestens 0,01 Ma.-% bezogen auf die Gesamtmasse der Spinnlösung zugesetzt werden.

## Beschreibung

Die Erfindung betrifft ein Verfahren zur Herstellung thermisch stabiler Form- oder Spinnlösungen, die Cellulose, ein wässriges stabiles tertiäres Aminoxid, vorzugsweise N-Methylmorpholin-N-oxid (NMMO), ein Nichtlösungsmittel für Cellulose, insbesondere Wasser und Stabilisatoren enthalten, die nach dem Trocken-Nassextrusionsverfahren zu cellulosischen Fasern versponnen oder zu Folien verzogen werden.

### Stand der Technik

Tertiäre Aminoxide, als Lösungsmittel aus der US-PS 2.179.181 bekannt, sind thermisch nicht sehr stabil. So baut z. B. N-Methylmorpholin-N-oxid zu N-Methylmorpholin (NMM), Morpholin (M), N-Formylmorpholin, Formaldehyd (F) und Kohlendioxid ab. Während des Löseprozesses kommt es zum Abbau der Cellulose und des NMMO (Firgo et al., Lenz. Ber. 9, 1994, 81-89).

Nach heutigem Erkenntnisstand werden als Ursachen für die thermische Instabilität von Aminoxid-Lösungen die nachfolgenden Substanzen und Reaktionen genannt:
1. Thermische Instabilität des NMMO (Taeger et al., Formeln, Fasern, Fertigware, 4, 1985, 14-22).
2. Reaktivität des NMMO und die seiner Zersetzungsprodukte, wie z. B. Morpholin und Formaldehyd (Rosenau et al., Prog. Polym. Sci. 26, 2001, 1763-1837).
3. Kurzlebige Zwischenprodukte, die autokatalytische Reaktionen auslösen können, z. B. das N-Methylmorpholinium-Kation und das N-Methylmorpholiniumyl-Radikal (Rosenau et al., J. Org.Chem. 64, 1999, 2166-2167; Rosenau et al., Tetrahedron 58, 2002, 3073-3078).
4. Reaktionen des NMMO mit der Cellulose, mit deren Kettenabbauprodukten und deren reaktiven Endgruppen, wie z. B. -CHO (Rosenau et al., Prog. Polym. Sci. 26, 2001, 1763-1837).
5. Kontaminationen durch Schwermetalle, die über einen
   Wertigkeitswechsel Redoxreaktionen mit NMMO eingehen können, wie z. B. Fe und Cu. (Ferris et al., J. Org.
   Chem., 33, 1968, 3493-3498; Buijtenhuijs et al., Das
   Papier 12, 1986, 615- 619).
6. Modifizierung der Aminoxidlösung mit Additiven, z. B. saure Ionenaustauscher mit funktionellen Gruppen, wie Carboxylgruppen, die den pH-Wert herabsetzen und Reaktionen mit NMMO eingehen können (Rosenau et al., Holzforschung, 56, 2002, 199-208).

Durch gegebene Prozeßabläufe ist die Herstellung und Verformung von Aminoxid-Celluloselösungen bei Temperaturen zwischen 90 und 130°C nicht ohne Risiko. Es können unkontrollierbar ablaufende Reaktionen auftreten, die von Zusatzstoffen, Reaktionsprodukten und Umgebungsbedingungen bestimmt werden (Exothermie). Durch eine kurzzeitige Temperaturerhöhung infolge einer exothermen Reaktion, einem katalytischen Einfluss von Protonen oder Schwermetallionen, kann in einer Lyocell-Lösung ein Katalysator entstehen, der die Startreaktion für eine Autokatalyse initiiert.

Neben den verfahrenstechnischen Risiken beinhaltet eine verstärkte thermische Instabilität der Aminoxide auch wirtschaftliche Nachteile bei einer Kreislaufführung des Lösungsmittels. Neben dem Abbau des Aminoxids ist auch mit einem Abbau der Cellulose zu rechnen, was die Eigenschaften der Formkörper negativ beeinflusst.

Aminoxid-Celluloselösungen müssen aus den oben genannten Gründen stabilisiert werden. Dazu liegen eine Reihe von Publikationen und Patenten vor:

In der DD 158656 wird ein Verfahren zur Verringerung des Celluloseabbaus beschrieben, indem der Lösung Substanzen zugesetzt werden, die auf Aminoxide reduzierend wirken, wie z. B. Harnstoff, Hydroxylamin, Hydrazin, Sulfite, Thiosulfate, Dithionite, Thioharnstoff, Schwefel und reduzierende Zucker.

In der DE 3034685 werden zur Verringerung des Celluloseabbaus in aminoxidhaltigen Lösungen organische Verbindungen zugesetzt, die wenigstens vier Kohlenstoffatome, wenigstens zwei konjugierte Doppelbindungen und wenigstens zwei Hydroxyl- und/oder Aminogruppen mit wenigstens einem unsubstituierten Wasserstoffatom besitzen und/oder Glycerinaldehyd enthalten. Als wirksamster Stabilisator wird in der DE 3034685 Gallussäurepropylester (GPE) genannt.

Nach DD-A-0218104 hat dieses Verfahren Nachteile, da es zu einer Verfärbung der Celluloselösung kommt bzw. bei der Kreislaufführung des Aminoxids sich Reaktionsprodukte der genannten Zusatzstoffe anreichern. Außerdem können die Zusatzstoffe den durch Eisenverbindungen und andere Verunreinigungen katalysierten zusätzlichen Celluloseabbau nicht wirkungsvoll genug verhindern.

Nach der DD-A-0229708 können Lösungen von Cellulose in N-Methylmorpholin-N-oxid gegen den thermooxidativen Abbau dadurch stabilisiert werden, indem man substituierte Phenole, vorzugsweise 2.6-Di-tert.-butyl-p-Kresol zusetzt, von denen bekannt ist, daß sie Radikale abfangen. Die stabilisierende Wirkung führt nicht zur ausreichenden Stabilitäten der Spinnlösung.

Nach E-P-A-0111518 können Lösungen von Cellulose in N-Methylmorpholin-N-oxid durch Zusatz von Phosphorsäure und

Phosphonsäure oder deren Salze thermisch stabilisiert werden. Nach DD-A-0229708 ist die stabilisierende Wirkung nicht ausreichend.

Aus der DD-A-0218104 ist bekannt, dass man thermisch stabile Cellulose-Aminoxidlösungen erhalten kann, wenn man dem Aminoxid eine oder mehrere basische Substanzen in Konzentrationen zwischen 0,1 und 10 Ma.-%, bezogen auf die Celluloselösung, zusetzt. Als solche Substanzen werden Alkalihydroxide, wie z. B. Natronlauge, basisch reagierende Salze, wie z. B. Natriumcarbonat, sowie organische Stickstoffbasen beschrieben.

In der WO 95/23827 wird ausgeführt, dass man eine erhöhte thermische Stabilität der Spinnlösung dadurch erreicht, daß man eine wässrige Aminoxidlösung zum Lösen der Cellulose mit Natronlauge auf pH 10,5 - 13,5 einstellt.

Dagegen wird in der EP 0670917 B1 ausgeführt, dass der Zusatz basischer Substanzen den Abbau der Cellulose bei längerer thermischer Belastung nicht verhindern kann. Somit ist auch die Basenstabilisierung als solche nicht geeignet, beide Anforderungen, nämlich sowohl den Abbau des Aminoxids als auch den Abbau der Cellulose zu verhindern.

In der EP 0670917 B1 wird vorgeschlagen, die Spinnlösung dadurch zu stabilisieren, indem man einen oder mehrere Stabilisatoren der Spinnlösung zugibt, die insgesamt antioxidativ auf die Cellulose und ausreichend basisch wirken. Die Zugabe von Radikalfängern wie 3,3'-Thiodipropanol oder Kohlenstofftetrabromid beschreiben Guthrie et al. (In :

Kennedy, J.F., Phillips, G.O., Williams, P.A., editors, Chichester, Ellis Horwood, 1990, 49-57). Eigene Untersuchungen mit 2,6-Di-tert.-butyl-p-kresol (DBP) führten beim Tempern dieser Spinnlösungen zu einer stärkeren Verfärbung und Zunahme des Celluloseabbaus, als bei vergleichbaren unmodifizierten Proben. Das Abfangen freier Radikale und deren Umwandlung in langlebige, weniger reaktive Spezies erhöhte nicht die Stabilität dieser Spinnmassen. Vielmehr ist nicht die verminderte Radikalkonzentration für den Stabilitätsverlust ausschlaggebend, sondern der Einfluß einer komplexen Molekülstruktur auf das Lösungsverhalten der Cellulose in NMMO, in Verbindung mit einem definierten Wasseranteil. In diesem ternären System von Cellulose/NMMO/Wasser werden daher die Ursachen für die Abbauprozesse nicht vordergründig in radikalischen (homolytischen) Reaktionen gesehen, sondern in heterolytischen Prozessen. Verglichen zur Homolyse laufen diese Reaktionen bevorzugt in polaren Lösungsmitteln ab, da deren Ionen, im Gegensatz zu Radikalen, gut solvatisiert werden.

Rosenau et al. (Cellulose 9, 2002, 283-291) zeigen mit der Zugabe von α-Tocopherol, dass sowohl radikalische als auch heterolytische Reaktionen unterdrückt werden können, indem Carbenium-Iminium-Kationen, Radikale und Formaldehyd abgefangen werden.

Alle in den aufgeführten Patenten und Publikationen vorgeschlagenen Verfahren zur Stabilisierung von Form- oder Spinnlösungen betreffen die Zugabe von einer oder mehreren Substanzen, die den pH-Wert stabilisieren und gefährlichen Reaktionen von Zersetzungsprodukten entgegen wirken. Diese Zersetzungsprodukte kommen sowohl vom NMMO als auch von der Cellulose, da die Cellulose einen destabilisierenden Einfluß auf das NMMO beim Tempern der Spinnmassen ausübt. Mit abnehmendem Polymerisationsgrad steigt die Zahl der reduzierenden Endgruppen (Lukanoff et al., Acta Polymerica 35, 1984, 339-343). Beim vermehrten Einsatz von Zusatzstoffen kommt es unter den Bedingungen der Lösungsherstellung zu einer unvermeidbaren Überlagerung von Reaktionen dieser Stoffe mit dem NMMO und der Cellulose, was zur zusätzlichen Anreicherung von Zersetzungsprodukten führt. Verstärkt wird dieses Problem durch die ökonomisch bedingte Kreislaufführung des NMMO.

Der GPE wirkt nach AT-B 393 841 als Antioxidans und nach DD-A-0218104 bewirkt er gleichzeitig eine Verfärbung der NMMO-Celluloselösung, wobei es zur Reaktion mit den oxidierbaren Endgruppen der Cellulose kommen kann. In Gegenwart von Metallen werden durch GPE und anderen aromatischen Hydroxyverbindungen mit guten komplexierenden Eigenschaften gefährliche Reaktionen initiiert, die die thermische Instabilität der NMMO-Celluloselösungen erhöhen (Buijtenhuijs et. al., s.o.).

Die Zugabe von alkalischen Substanzen bremst zwar die thermische Zersetzung des NMMO, jedoch nicht vollständig (Lang et al., Cell. Chem. Technol. 20, 1986, 289-301). Zu hohe Basenkonzentrationen bedingen bei längerer thermischer Belastung einen zeitlich verzögerten Abbau der Cellulose (EP 0670917).

### Aufgabe der Erfindung

Es war Aufgabe der vorliegenden Erfindung, ein Verfahren zur Herstellung thermisch stabiler Form- und Spinnlösungen, enthaltend Cellulose, wasserhaltige, tertiäre Aminoxide und ein Nichtlösemittel für Regeneratcelluloseformkörper zu entwickeln. Dabei umfasst dieses thermisch stabile Verfahren ein Verfahren, bei dem bei vermindertem Abbau des Aminoxids der Ablauf von unkontrollierbar gefährlichen Reaktionen unter Beibehaltung des Polymersationsgrades der Cellulose in der Form- oder Spinnlösung reduziert wird. Erfindungsgemäß wird eine Stabilisierung durch Zugabe eines oder mehrerer Stabilisatoren in Mengen von mindestens 0,01 Ma.-% bezogen auf die Gesamtmasse der Spinnlösung erreicht. Bevorzugt wird mindestens eine Substanz aus der Gruppe von Formaldehyd und cyclischen aliphatischen Aminen verwendet. Besonders bevorzugt ist der Einsatz mindestens einer Substanz aus der Gruppe von Formaldehyd, Morpholin, N-Methylmorpholin und N-Formylmorpholin. Vorzugsweise handelt es sich dabei um solche Substanzen, die in ihrer Struktur denjenigen entsprechen, die auch als Folgeprodukte von Umwandlungs- und Zersetzungsreaktionen während der Spinnlösungherstellung entstehen. In der Summe dieser Produkte ist immer Formaldehyd (F) und Morpholin (M) enthalten. Daher werden als Stabilisatoren Formaldehyd und/oder Morpholin bevorzugt eingesetzt. Sowohl Formaldehyd als auch Morpholin können auch einzeln als Stabilisator verwenden werden. Als weitere cyclische aliphatische Amine werden N-Methylmorpholin und N-Formylmorpholin eingesetzt. Insgesamt können alle genannten Stabilisatoren allein oder in Mischung genutzt werden.

Überraschenderweise wurde gefunden, dass die Zugabe der oben genannten Stabilisatoren, insbesondere von F und M einzeln oder in Kombination eine verbesserte Stabilität und Qualität der Spinnlösung bewirkt. Die Reihenfolge der Zugabe der Substanzen liegt im Können des Fachmanns und erfolgt vorzugsweise vor der Herstellung der Form- oder Spinnlösung. Bei Verwendung mehrerer Stabilisatoren können diese gleichzeitig oder nacheinander zugegeben werden. Die Wirksamkeit der Zusatzstoffe wurde beispielsweise bei Zugabe von Formaldehyd im Bereich von 0,01 bis 1,0 Ma.-%, vorzugsweise 0.02 bis 0,9 Ma.-%, höchst bevorzugt 0,05 Ma.-% bis 0,3 Ma.-% und/oder Morpholin im Bereich von 0,01 bis 3 Ma.-%, bevorzugt 0,06 bis 2,7 Ma.-%, höchst bevorzugt bei 0,15 Ma.-% bis 0,9 Ma.-% bezogen auf die Spinnlösung nachgewiesen. Das Risiko einer Exothermie kann bei Zugabe der genannten Stabilisatoren, insbesondere von Formaldehyd und

Morpholin zur Form- oder Spinnlösung reduziert werden, weil diese Verbindungen bei Temperaturen unterhalb 120 °C über eine Zeitdauer von 200 min bevorzugt den exponentiellen Anstieg der Reaktionsgeschwindigkeiten von Umwandlungs- und

Zersetzungsreaktionen verhindern. Die erfindungsgemäßen thermisch stabilen Form- und Spinnlösungen werden zur Herstellung von cellulosischen Formkörpern nach einem Trocken-Nassextrusionsverfahren eingesetzt. Sie werden zu cellulosischen Fasern versponnen oder zu Folien verzogen.

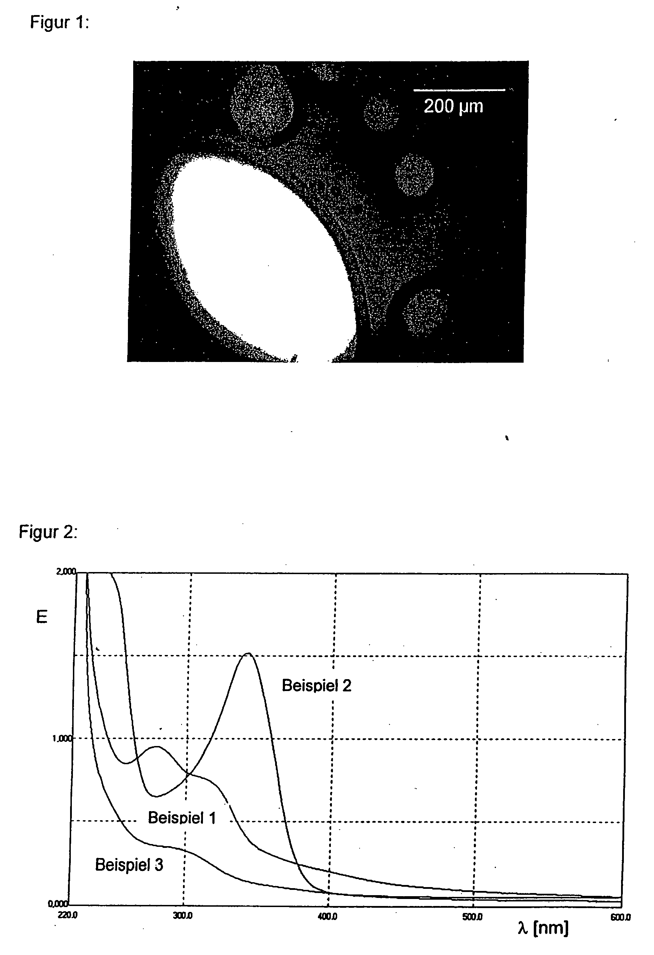

Figur 1 zeigt die mikroskopische Aufnahme einer getemperten unstabilisierten Spinnlösung bei 140 °C nach einer Dauer von 30 min, mit den sich abzeichnenden hellen Bereichen auskristallisierter Cellulose. Diese Bereiche grenzen ohne Übergang an Gebiete mit einer hohen NMMO Konzentration und üben über ihre Peripherie einen katalysierenden Einfluß auf den NMMO-Zerfall aus. Sie sind als Zersetzungsprodukte dunkel dargestellt. Die reduktiv wirkenden Aldehydgruppen des Formaldehyds verlangsamen den Celluloseabbau in einer wässrigen Lösung von NMMO und unterdrücken die thermische NMMO-Zersetzung. Überraschenderweise wurde gefunden, dass bei Zugabe von Morpholin auch ein Stabilisierungseffekt eintritt, der die Bildung von Bereichen mit kristalliner Cellulose unterdrückt.

Im Zusammenwirken der genannten Stabilisatoren, insbesondere von Formaldehyd und Morpholin, werden Zerfallsreaktionen in der Form- oder Spinnmasse verlangsamt und Gleichgewichtsprozesse von Umwandlungsreaktionen in der Lyocell-Lösung günstig beeinflußt. Diese Reaktionen hängen stark von der Cellulosekonzentration in der Ausgangslösung ab. Auskristallisierte Bereiche beschleunigen die thermisch bedingten Zerfallsreaktionen und initieren neue Gleichgewichts- und Umwandlungsreaktionen. So wurde bei Zugabe von 0,1% Formaldehyd und 0,3% Morpholin unter gleichen Ausgangsbedingungen gefunden, daß die Erhöhung der Cellulosekonzentration von 9 Ma.-% auf 12 Ma-% den DP der Cellulose von 476 auf 376 absenkt.

Formaldehyd wird als handelsübliche Formalinlösung mit Gehalten von 20 bis 35 % HCHO, Morpholin wird als handelsübliche p.a. - Ware eingesetzt. Die weiteren Stabilisatoren, d.h. die weiteren cyclischen aliphatischen Amine sowie die bevorzugten Substanzen Morpholin, N-Methylmorpholin und

N-Formylmorpholin werden ebenfalls als handelsübliche p.a. - Ware verwendet.

Die Konzentrationsbestimmung ergab bei Zugabe der Stoffe, welche selbst Zersetzungsprodukte des Lösungsmittels sind, wie Formaldehyd, Morpholin, N-Methylmorpholin und N-Formylmorpholin, insbesondere bei Zugabe von Formaldehyd und Morpholin, nach deren Zugabe keine erhöhten Werte, insbesondere für Formaldehyd und Morpholin in denjenigen Spinnlösungen, deren Cellulosekonzentrationen vergleichbar waren. Die Konzentrationen dieser Verbindungen, insbesondere der beiden Verbindungen Formaldehyd und Morpholin sollten daher mindestens einer Gleichgewichtsreaktion im System Cellulose/NMMO/Wasser unterliegen, über deren Verlauf ihre Reaktionsgeschwindigkeit so beeinflußt wird, dass die Entstehung von gefährlichen Zwischenprodukten während der Lösungsherstellung minimiert wird. Die günstige Beeinflussung von Reaktionen über die Gleichgewichtsphase setzt das Entstehen von Auslösern für gefährliche Reaktionen herab, etwa für die von beschleunigt verlaufenden autokatalytischen Reaktionen.

Bei Anwendung der erfindungsgemäßen Stabilisatormischung werden helle und klare Spinnlösungen erhalten, die einen hohen Polymerisationsgrad mit entsprechend guten viskosen Eigenschaften besitzen. Auch nach sechsstündiger Temperung der Spinnlösung bei 90 °C ist nur eine geringe Abnahme der Viskosität zu verzeichnen.

Die Herstellung der Form- oder Spinnlösung mit der erfindungsgemäßen Stabilisatormischung war zudem von einer geringen Chromophorenbildung begleitet. Im Gegensatz zu den oben beschriebenen aromatischen Hydroxyverbindungen wird bei dieser Stabilisierung die Bildung von farbigen Reaktionsprodukten (Chromophoren) des Stabilsators mit NMMO oder der Cellulose zurückgedrängt.

Die verminderte Chromophorenbildung in der Form- oder Spinnlösung wirkt sich außerdem günstig auf die Ausbildung der Celluloseformkörper aus. Das Auswaschen der hauptsächlich wasserlöslichen gefärbten Verbindungen vereinfacht sich und führt zu hellen cellulosischen Formkörpern.

Ein weiterer positiver Effekt ist, dass insbesondere bei Verwendung von Formaldehyd und Morpholin der pH-Wert nicht abgesenkt wird, obwohl der pH-Wert einer 20 %-igen Formalinlösung schon bei 3,5 liegt. Bekanntermaßen führt die pH-Wertabsenkung zur Instabilisierung der N-O-Bindung und damit zur beschleunigten Zersetzung des NMMO mit einem erhöhten Exothermierisiko (EP 0670917 B1). Die einzelne Anwendung von Formaldehyd führt auch bei 100%-iger Konzentrationserhöhung nicht zur pH-Wertabsenkung. Diese Konstanz des pH-Wertes ist nur mit der unstabilisierten bzw. mit der mit Natronlauge stabilisierten Spinnlösungvergleichbar. Somit verursacht die erfindungsgemäße Stabilisatormischung keine zusätzliche Säurebildung, die über den reaktiven Angriff des NMMO zu einem erhöhten Exothermierisiko neigt.

Im Verzicht auf die sonst übliche Basenstabilisierung besteht ein weiterer Vorteil darin, dass die Kationenkonzentration in der Form- oder Spinnlösung reduziert ist. Die ohnehin geringere Belastung der Spinnlösung mit Zersetzungsprodukten ermöglicht somit zusätzlich eine einfachere Aufarbeitung des im Kreislauf geführten NMMO im Prozesswasser.

Die Wirkung des erfindungsgemäßen Stabilisatorsystems lässt sich durch den Zusatz sowohl von Komplexbildnern, wie z. B. phenolischen Derivaten wie Brenzcatechin, Hydrochinon und

Pyrogallol, sowie Gallussäurepropylester, Ethylendiamintetraessigsäure-dikaliumsalz oder Glycin, als auch organischen Basen, wie z. B. Hydroxylamin oder Benzylamin weiter erhöhen. Die Konzentration dieser Zusätze kann dabei bis auf ca. 10 % der ansonsten typischen Menge abgesenkt werden.

Die angewandten Prüfmethoden zur Beurteilung der Stabilität der Cellulloselösungen werden im Folgenden erläutert.

### Prüfmethoden zur Beurteilung der thermischen Stabilität von Spinnlösungen:

### Durchschnittlicher Polymerisationsgrad (DP)

Der durchschnittliche Polymerisationsgrad wurde nach der Cuoxam-Methode mit einem Ubbelohde-Viskosimeter bestimmt.

### Dynamische Viskosität

Die Dynamische Viskosität (Nullscherviskosität) wurde mit dem Rheometer "Rheostress 100" mit der Temperiereinrichtung TC 500 der Fa. Haake (Bezugstemperatur 85°C) gemessen. Die Messungen wurden sowohl nach unmittelbarer Herstellung der Form- oder Spinnlösung als auch nach einer sechsstündigen Temperung bei 90 °C durchgeführt.

### Miniautoklav

Die Prüfungen auf beschleunigte exotherme Zersetzungsreaktionen wurden kalorimetrisch mit dem Sicherheitskalorimeter "RADEX" der Fa. System Technik Deutschland GmbH durchgeführt. In einem verschlossenen Stahlgefäß (Prüfdruck 100 bar, Berstscheibe) wurden 2 g der Form- oder Spinnlösung eingewogen. Temperatur- und Druckverlauf wurden über zwei Messmodi verfolgt.

### 1. Dynamisch

Die Probe wurde mit einer Heizrate von 0,75 K/min von Raumtemperatur bis auf 300°C aufgeheizt. Zur Beurteilung der Stabilität der Proben wurde die niedrigste Temperatur Tₒₙₛₑₜ ermittelt, bei der die zu prüfende

Substanz einen signifikanten Druckanstieg dp/dt zeigte.

### 2. Isoperibole Messung

Zur Beurteilung der Langzeitstabilität wurde die Probe über 24 Stunden konstant bei einer Temperatur von 140°C gehalten. Die zeitliche Ableitung des Druckes nach der Zeit (dp/dt in bar/min) durchläuft ein Maximum, dessen Höhe und Lage auf der Temperaturskala die Grundlage für die Beurteilung der thermische Stabilität der Spinnlösung bildeten.

### UV/VIS-Methode

Die absorptionsspektroskopischen Veränderungen wurden temperaturabhängig im Wellenlängenbereich von 200 - 600 nm und zeitabhängig bei einer konstanten Wellenlänge von 400 nm untersucht. Hierzu wurde eine temperierbare Küvette verwendet, die in ein Spektrometer der Fa. Shimadzu, Typ UV-2401 PC eingesetzt wurde. Mit einem PID-Regler (Thermoelement Typ K, ΔT = 0,1 K), einer Heizleistung der Küvette von 50 W und einer optischen Schichtdicke von 350 *µ*m erfolgten die Prüfungen.

Über die Extinktionsänderung ΔE konnten zeitliche Veränderungen in der Probe gemessen werden. Durch Vergleich des zeitlichen Extinktionsverlaufes einer stabilen Form- oder Spinnlösung (Standardwert) mit solchen von beschleunigten exothermen Zersetzungsreaktionen wurden Auswertungskriterien abgeleitet:

Die Extinktionsänderung (ΔE)₅₀ und der Extinktionsanstieg(ΔE/Δt)₅₀ über den zeitlichen Verlauf von 50 min wurden zur Auswertung ebenso herangezogen wiedie Änderung (ΔE)₄₀₀ = E(0) - E(400) zwischen Beginn und Ende der Untersuchungen nach 400 min. Zum direkten Vergleich verschiedener Form- oder Spinnlösungen erwiesen sich Temperungsbedingungen bei 120°C und einer Wellenlänge von 400 nm am geeignetsten.

### Messung der farblichen Veränderungen

Die auftretenden farblichen Veränderungen an Form- oder Spinnlösungen wurden zusätzlich aus einem Wasserextrakt ermittelt, das einem Verhältnis von 1 : 3 entsprach. 10 g der zerkleinerten Form- oder Spinnlösung wurden bei Umgebungstemperatur mit 30 ml destilliertem Wasser versetzt, 48 Stunden stehengelassen und filtriert. Die Extinktion E(470) des Extraktes wurde bei einer Wellenlänge von 470 nm mit dem UV/VIS-Spektrometer UV-2401 PC der Fa. Shimadzu gemessen.

An den nachfolgend aufgeführten Beispielen wird die Erfindung näher beschrieben:

### Beispiele

### Vergleichsbeispiel 1

Zur Herstellung einer Spinnmasse mit einem Cellulosegehalt von 9 Ma.-% wurden in einem Laborkneter 227,3 g 49,6%-iges NMMO (N-Methylmorpholin-N-oxid) vorgelegt und 13,7 g Fichtenzellstoff mit einer Restfeuchte von 6,3 Ma.-% und einem Polymerisationsgrad (DP) von 495 zugegeben. Der Reaktor wurde geschlossen und die Maische 15 Minuten bei Raumtemperatur gerührt und anschließend Vakuum von ca. 30 mbar angelegt. Die Temperatur im Kneter wurde in Stufen auf 90°C erhöht. Nach ca. 240 Minuten war der Lösevorgang beendet.

Zur Prüfung der Stabilität der einzelnen Spinnlösungen wurden die beschriebenen Prüfmethoden, wie die dynamische Viskosität, Prüfungen im Miniautoklav und die UV/VIS-Methode herangezogen. Die Chromophorenbildung in der Form-oder Spinnlösung wurde in wässerigen Eluaten bei einer Wellenlänge von 470 nm absorptionsspektroskopisch vermessen. Als weiteres Stabilitätskriterium wurde der durchschnittliche Polymerisationsgrad (DP) verwendet.

### Vergleichsbeispiel 2

Die Lösung 2 wurde analog Beispiel 1 hergestellt. Zur Stabilisierung wurden 0,06 Ma.-% Gallussäurepropylester, 0,04 Ma.-% Natronlauge und 0,1 Ma.-% Hydroxylamin, bezogen auf die Spinnlösung, zugegeben.

### Beispiel 3

Die Lösung 3 wurde analog Beispiel 1 hergestellt. Zur Stabilisierung wurden 0,1 Ma.-% Formaldehyd und 0,3 Ma.-% Morpholin eingesetzt.

### UV/VIS - spektroskopische Messungen

Von den kurz zuvor hergestellten Form- oder Spinnlösungen wurden die UV/VIS-Spektren im Wellenlängenbereich von 200 bis 600 nm aufgenommen [Figur 2].

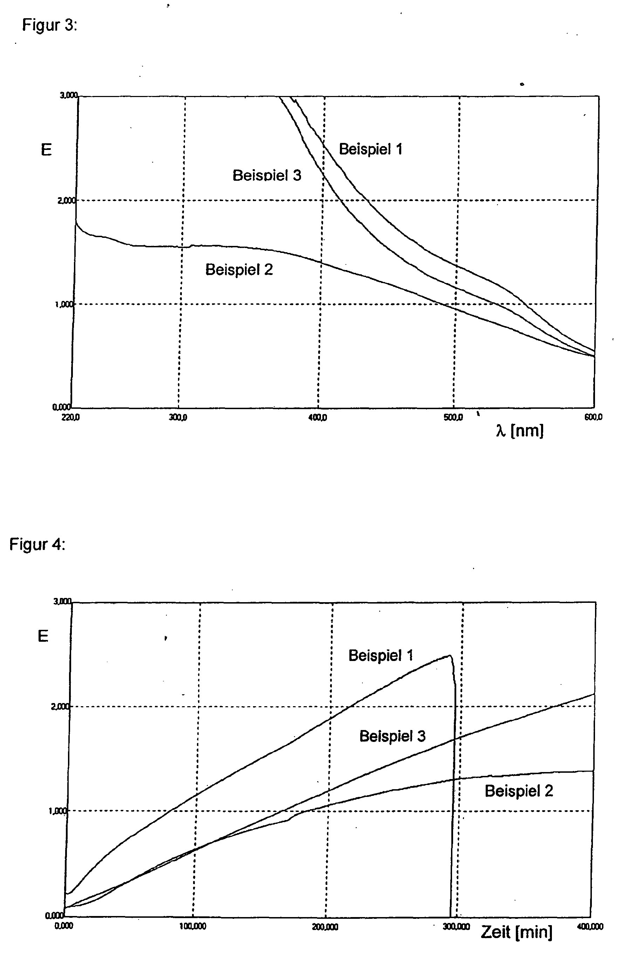

Die Spektren der unstabilisierten (Vergleichsbeispiel 1) und stabilisierten Spinnlösungen (Vergleichsbeispiel 2) zeigen charakteristische Banden mit hohen Extinktionen zwischen 260 nm und 380 nm. Das Spektrum von Beispiel 3 besitzt diese Veränderungen nicht, was auf eine reduzierte Bildung von Zersetzungsprodukten hinweist. Nach einer Temperung von 400 min bei 120 °C wurden die UV/VIS-Spektren erneut aufgenommen [Figur 3].

Hier zeigt sich, dass die Spinnlösung nach Beispiel 2 im Extinktionsverlauf unter denen der beiden anderen Spinnlösungen liegt und keine Maxima mehr aufweist. Die beiden anderen Lösungen zeigen starke Extinktionsanstiege unterhalb von 350 nm, wobei die Lösung mit der erfindungsgemäßen Stabilisatormischung jedoch deutlich unterhalb der unstabilisierten Spinnlösung liegt.

Die UV/VIS-Spektren bei einer Temperatur von 120 °C und der Wellenlänge von 400 nm machen die zeitabhängigen Veränderungen in den Spinnlösungen in Figur 4 deutlich, die Prüfergebnisse zeigt Tabelle 1.

**Tabelle 1:**

| Beispiel | (ΔE)₅₀ | (ΔE)₄₀₀ |
|---|---|---|
| 1 | 0,41 | - |
| 2 | 0,31 | 1,32 |
| 3 | 0,31 | 2,10 |

Der Extinktionsanstieg zu Beginn der Messung, über die Zeitspanne von 50 min gemittelt, kann als Maß für die Zersetzung angesehen werden. Hier werden schon z. T. die Zersetzungsprodukte gebildet, die beschleunigend in das Reaktionsgeschehen eingreifen können. Die erfindungsgemäße Stabilisierung nach Beispiel 3 liegt im Extinktionsverlauf unterhalb der unstabilisierten Spinnlösung nach Beispiel 1. Wie in Abbildung 1 dargestellt, treten bei der unstabilisierten Spinnlösung nach ca. 300 min Inhomogenitäten auf, die bei den anderen Beispielen nicht beobachtet werden, da sie eine gute thermische Stabilität aufweisen.

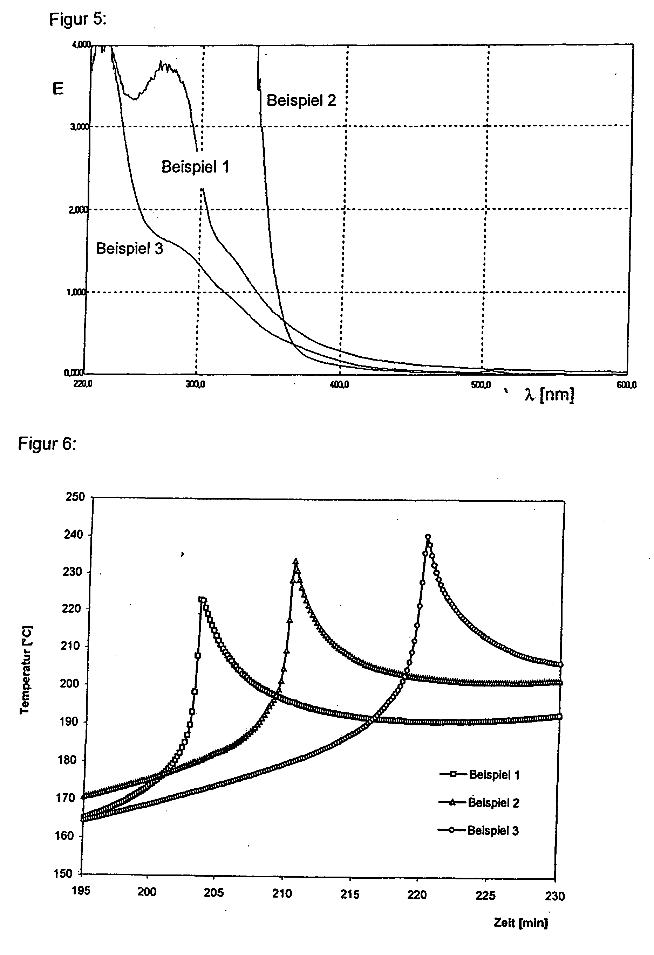

Darüber hinaus bestätigen die wässrigen Extrakte die farblichen Veränderungen nach der Temperung bzw. bei der Herstellung der Spinnlösungen. In Figur 5 ist der Verlauf der Kurven dargestellt.

Die Spinnlösungen der Beispiele 1 und 2 zeigen starke Extinktionsbanden unterhalb von 350 nm. Dabei übertrifft die Spinnlösung mit GPE, Natronlauge und Hydroxylamin noch die unstabilisierte Spinnlösung. Im Extinktionsverlauf der erfindungsgemäß stabilisierten Spinnlösung ist bei ca. 300 nm ein leichtes Maximum zu erkennen. Insgesamt liegt die Extinktion jedoch deutlich unter denen der Beispiele 1 und 2, was auf eine sehr geringe Belastung mit Zersetzungsprodukten schließen lässt.

### Miniautoklavuntersuchungen

Figur 6 zeigt die Temperaturkurven der dynamischen Messungen. Normiert auf die Starttemperatur von 30 °C zeigen die Peakmaxima der drei Spinnlösungen starke Differenzierungen. Die unstabilisierte Spinnlösung erscheint zuerst, wesentlich später die Spinnlösung nach Beispiel 2, die Spinnlösung mit der erfindungsgemäßen Stabilisatormischung schließlich weit hinten. Diese stabilen thermischen Verhältnisse werden durch die Onset-Temperatur bestätigt Tabelle 2.

**Tabelle 2:**

| Beispiel | Tonset [°C] |
|---|---|
| 1 | 145 |
| 2 | 158 |
| 3 | 160 |

Die Ergebnisse der dynamischen Temperaturmessung sind in Figur 6 dargestellt. Sowohl die Temperatur- als auch die Druckmessung (Tₒₙₛₑₜ als Druckanstieg) verdeutlichen die Verzögerung der thermischen Zersetzung durch die Anwendung von Formaldehyd und Morpholin als Stabilisatoren.

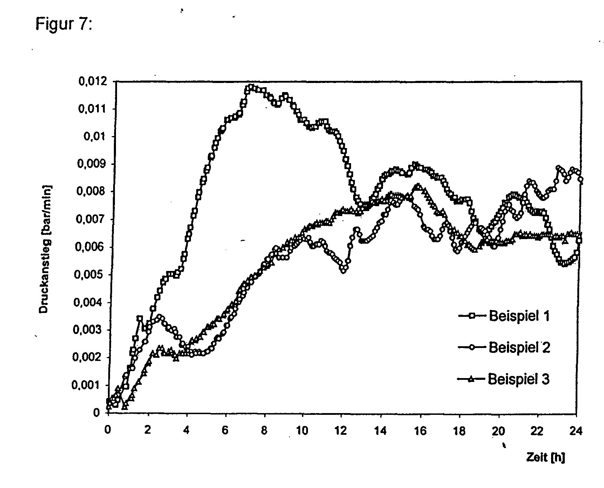

Die Langzeitmessungen bei 140 °C zeigt Figur 7. Die Spinnlösungen nach den Beispielen 2 und 3 besitzen wesentlich geringere Druckanstiege gegenüber der unstabilisierten Spinnlösung, was eine verbesserte thermische Stabilität ausdrückt. Die Druckmessung stellt einen Indikator für die Entstehung von nichtkondensierbaren Gasen, wie z. B. CO₂ oder NH₃ dar. Zersetzungsreaktionen mit Gasbildung werden somit durch die erfindungsgemäße Stabilisierung unterdrückt.

### Beispiel 4

Die Lösung 4 wurde analog Beispiel 1 hergestellt. Zur Stabilisierung wurden 0,1 Ma.-% Formaldehyd, 0,3 Ma.-% Morpholin und 0,06 Ma.-% Gallussäurepropylester eingesetzt.

### Untersuchungen zum Polymerisationsgrad und Viskosität

Für die Herstellung von cellulosischen Formkörpern ist der DP ein wichtiges Kriterium. Tabelle 3 zeigt für die Spinnlösungen nach den Beispielen 1 - 4 die Werte für den DP und die Viskosität.

**Tabelle 3:**

| Beispiel | DP | Dynamische Viskosität | |
|---|---|---|---|
| | | η₀ [Pas] | η₀/η |
| 1 | 393 | 328 | 3,6 |
| 2 | 478 | 1171 | 1,1 |
| 3 | 476 | 978 | 1,3 |
| 4 | 483 | 1207 | 1,1 |

Der Vergleich zeigt, dass die stabilisierten Mischungen nach den Beispielen 2 - 4 den Abbau der Cellulose sehr gut stabilisieren. Die erfindungsgemäße Stabilisierung liegt bei den Viskositätswerten etwas unter denen der anderen Beispiele. Die Zugabe von GPE zu der erfindungsgemäßen Stabilisatormischung wirkt sich günstig auf den DP der Cellulose aus, führt aber wie oben diskutiert zu erhöhter

## Patentansprüche

1. Thermisch stabile Form- und Spinnlösung, enthaltend Cellulose, wasserhaltige, tertiäre Aminoxide und ein Nichtlösemittel, **dadurch gekennzeichnet, dass** als Stabilisator mindestens eine Substanz aus der Gruppe von Formaldehyd und cyclischen aliphatischen Aminen in Mengen von mindestens 0,01 Ma.-% bezogen auf die Gesamtmasse der Spinnlösung enthalten ist.

2. Thermisch stabile Form- und Spinnlösung nach Anspruch 1, **dadurch gekennzeichnet, dass** als Stabilisator mindestens eine Substanz aus der Gruppe von Formaldehyd, Morpholin, N-Methylmorpholin und N-Formylmorpholin enthalten ist.

3. Thermisch stabile Form- und Spinnlösung nach Anspruch 1 bis 2, **dadurch gekennzeichnet, dass** als Stabilisatoren Formaldehyd und/oder Morpholin enthalten sind.

4. Thermisch stabile Form- und Spinnlösung nach Anspruch 1 bis 3, **dadurch gekennzeichnet, dass** als Stabilisator Formaldehyd enthalten ist.

5. Thermisch stabile Form- und Spinnlösung nach Anspruch 1 bis 3, **dadurch gekennzeichnet, dass** als Stabilisator Morpholin enthalten ist.

6. Thermisch stabile Form- und Spinnlösung nach Anspruch 1 bis 5, **dadurch gekennzeichnet, dass** die Stabilisatoren allein oder in Mischung enthalten sind.

7. Thermisch stabile Form- und Spinnlösung nach den Ansprüchen 1 bis 6, **dadurch gekennzeichnet, dass** neben den Stabilisatoren Gallussäurepropylester enthalten ist.

8. Thermisch stabile Form- und Spinnlösung nach den Ansprüchen 1 bis 7, **dadurch gekennzeichnet, dass** neben den Stabilisatoren phenolische Derivate enthalten sind.

9. Thermisch stabile Form- und Spinnlösung nach einem oder mehreren der Ansprüche 1-8, **dadurch gekennzeichnet, dass** als tertiäres Aminoxid N-Methylmorpholin-N-oxid enthalten ist.

10. Verfahren zur thermischen Stabilisierung von Form- und Spinnlösungen enthaltend Cellulose, wasserhaltige, tertiäre Aminoxide und ein Nichtlösemittel, **dadurch gekennzeichnet, dass** als Stabilisator mindestens eine Substanz aus der Gruppe von Formaldehyd und cyclischen aliphatischen Aminen in Mengen von mindestens 0,01 Ma.-% bezogen auf die Gesamtmasse der Spinnlösung zugesetzt wird.

11. Verfahren nach Anspruch 10, **dadurch gekennzeichnet, dass** als Stabilisator mindestens eine Substanz aus der Gruppe von Formaldehyd, Morpholin, N-Methylmorpholin und N-Formylmorpholin zugesetzt wird.

12. Verfahren nach Anspruch 10 bis 11, **dadurch gekennzeichnet, dass** als Stabilisatoren Formaldehyd und/oder Morpholin zugesetzt werden.

13. Verfahren nach Anspruch 11 bis 12, **dadurch gekennzeichnet, dass** als Stabilisator Formaldehyd zugesetzt wird.

14. Verfahren nach Anspruch 11 bis 12, **dadurch gekennzeichnet, dass** als Stabilisator Morpholin zugesetzt wird.

15. Verfahren nach Anspruch 11 bis 14, **dadurch gekennzeichnet, dass** die Stabilisatoren allein oder in Mischung zugesetzt werden.

16. Verfahren nach Anspruch 11 bis 15, **dadurch gekennzeichnet, dass** neben den Stabilisatoren Gallussäurepropylester zugesetzt wird.

17. Verfahren nach Anspruch 11 bis 16, **dadurch gekennzeichnet, dass** als tertiäres Aminoxid N-Methylmorpholin-N-oxid zugesetzt wird.

18. Verwendung der thermisch stabilen Form- und Spinnlösung nach den Ansprüchen 1 bis 9 zur Herstellung von cellulosischen Formkörpern nach einem Trocken-Nassextrusionsverfahren.
